# EUROPEAN PATENT APPLICATION

(11) **EP 4 844 695 A1**
(43) Date of publication of application: **25.11.2026**
(21) Application number: 25177230.7
(22) Date of filing: 19.05.2025
(51) Int. Cl.: G06V 10/62, G06V 20/52

(54) **COMPRESSING METADATA INDICATING MOTION PATHS OF RESPECTIVE OBJECTS TRACKED IN THE VIDEO DATA**

(71) Applicant: Axis AB, 223 69 Lund (SE)
(72) Inventor: Edpalm, Viktor, 223 69 LUND (SE); Yuan, Song, 223 69 LUND (SE)
(74) Representative: AWA Sweden AB

(57) **Abstract**

This disclosure describes compression of metadata of video data depicting a scene, the metadata indicating motion paths of objects tracked in the video data. Examples comprises determining (S802), from historical video data, one or more representative motion paths comprising sequential position data; continuously receiving (S804) video data depicting the scene and tracking a first object; determining (S806) a first portion of a motion path of the first object, indicating position data at a first plurality of time points; comparing (S808) the first portion with at least one representative motion path to determine a first similarity score; determining (S810) a second portion of the motion path of the first object, indicating position data at a second plurality of time points comprising at least a subset of the first time points and/or later time points; and determining (S812) metadata indicating the second portion and compressing it based on the similarity score.

## Description

### Technical Field

The present invention relates to object tracking in video data and in particular to compression of metadata indicating motion paths of the tracked objects.

### Background

Modern video capture systems increasingly generate not only audiovisual content but also supplementary metadata streams that describe an understanding of a captured scene. These metadata streams are typically derived through video analysis techniques and may include information about detected and tracked objects, such as classifications, identities, positions, and motion paths.

Such metadata serves a wide range of purposes on the receiving side. It can support intelligent search operations, for example by enabling the identification of objects exhibiting abnormal behaviour. It can also facilitate statistical analyses, such as tracking the frequency, movement patterns, or interactions of objects over time within the captured environment.

As video processing systems continue to evolve, the volume and detail of extracted metadata have grown significantly. In many scenarios, the metadata stream may now contain more data than the corresponding video stream. Furthermore, there is a growing need to preserve metadata for extended durations, potentially indefinitely, to support long-term analysis. This increase in metadata size poses challenges in terms of storage requirements, transmission bandwidth, and processing efficiency.

There is thus a need for improvements in this context.

### Summary

In view of the above, solving or at least reducing one or several of the drawbacks discussed above would be beneficial, as set forth in the attached independent patent claims.

According to a first aspect of the present invention, there is provided a method for compressing metadata of video data depicting a scene, the metadata indicating motion paths of respective objects tracked in the video data, the method comprising: determining, from historical video data depicting the scene, one or more representative motion paths of objects tracked in the scene, each representative motion path comprises sequential position data defining representative object motion in the scene; continuously receiving video data depicting the scene and tracking a first object in the received video data; determining a first portion of a motion path of the first object, the first portion indicating position data of the first object at a first plurality of time points in the received video data; comparing the first portion of the motion path with at least one representative motion path of the one or more representative motion paths to determine a first similarity score; determining a second portion of the motion path of the first object, the second portion indicating position data of the first object at a second plurality of time points in the received video data, wherein the second plurality of time points comprise one or more of: at least a subset of the first plurality of time points; and one or more time points occurring after the first plurality of time points; and determining first metadata indicating the second portion of the motion path and compressing the first metadata based on the first similarity score, wherein a compression level applied to the first metadata increases with an increasing first similarity score.

In the context of the present disclosure, a "motion path" refers to a sequence of position data (points) associated with a tracked object in video data, where each position data corresponds to a specific time point in the video data. The motion path thus represents the trajectory or movement pattern of the object over a period of time within a scene depicted by the video data. Each position data within a motion path may indicate the spatial location of the object in the scene at a given moment (time point) and may be defined in absolute or relative coordinates, such as image-space coordinates (e.g., pixel coordinates), scene-based coordinates (e.g., world coordinates such as GPS), or any other suitable spatial representation.

A "representative motion path", as used in the present disclosure, refers to a motion path that characterizes a commonly observed or statistically significant pattern of object movement within a particular scene. Such motion paths are derived from historical video data by analysing and aggregating the motion behaviour of multiple objects previously tracked in the scene (in some embodiments in the same or similar settings of the scene), for example using techniques such as clustering, averaging, or trajectory modelling.

The "similarity score", as referred to in the present disclosure, is a metric that quantifies how closely a given motion path matches one or more representative motion paths derived from historical data. Specifically, the score reflects the highest degree of similarity that can be determined when comparing the observed motion path to each of the available representative motion paths. The similarity score increases with the level of conformance to the representative motion path, i.e., higher values indicate a better alignment between a current (new) motion path and previously observed and statistically common motion patterns in the scene.

The inventors have recognized that object tracks which closely conform to statistically common motion patterns within a scene are generally of less interest for downstream analysis applications, such as abnormal behaviour detection. Conversely, tracks that deviate from these established motion patterns tend to be of higher analytical value, as they may indicate anomalous or noteworthy activity. Building on this insight, a selective and lossy compression strategy for metadata is proposed, wherein the compression algorithm dynamically assigns compression levels based on the degree of deviation of a motion path of the currently tracked object as compared to the one or more representative motion paths. Metadata associated with motion paths that are highly similar to representative motion paths, i.e., object tracks that follow expected or common patterns, is compressed more aggressively, resulting in reduced details in the metadata and thus reduced data volume. In contrast, metadata corresponding to motion paths that deviate significantly from the representative motion path(s) is compressed less or not at all.

As used herein, the "first portion of a motion path" and "second portion of the motion path" (sometimes referred to as first portion and second portion for simplicity) both correspond to the same object track, i.e., they describe the movement of the same object as it is tracked through the scene. However, these two portions may relate to different temporal portions of the track. Specifically, the "first portion" is used to compute a similarity score by comparing the observed positions of the object, at a first set of time points, with one or more representative motion paths. This similarity assessment serves as a basis for deciding how aggressively to compress metadata indicating the motion of the object. Importantly, the actual compression may be applied not to the first portion itself, but to the second portion of the motion path, which includes position data of the tracked object for a second plurality of time points. This second set of time points may partially or fully overlap with the first set of time points (e.g., covering the same or a subset of earlier time points), and/or may extend beyond the first set of time points to include future positions of the same object track. This allows for use of early observations of object behaviour to guide compression decisions for later portions of the motion path (i.e., the object track). In some cases, the first and second portions are the same, i.e. based on object motion for the same set of time points.

In some examples, the compression level is increased by only including the position data of the first object in the first metadata at a subset of time points of the second plurality of time points.

By omitting, in the metadata, position data at certain time points in cases where the motion of the object aligns with a known representative motion path, the metadata size is reduced while still retaining sufficient information to reconstruct or infer the motion of the object with acceptable accuracy, such as counting the number of left turns of a vehicle.

In some examples, the compression level is increased by reducing the precision of the position data of the first object when included in the first metadata.

Advantageously, the compression level can be increased by reducing the precision of the position data, e.g., through quantization, when indicating the positions of the tracked object in the metadata. This allows for more compact representation of motion paths, e.g., when high precision may be considered as unnecessary due to strong similarity with a representative motion pattern of the one or more representative motion patterns.

In some examples, the first portion or the second portion of the motion path is associated with a confidence level indicating a level of accuracy of the first portion of the motion path. In such cases, the method comprises adjusting the compression level applied to the first metadata based on the confidence level, such that, for a given value of the first similarity score, the compression level increases as the confidence level decreases.

By taking into account a confidence level of either the first portion or the second potion, where the confidence level indicating the level of accuracy or reliability of the first/second portion, a more efficient metadata compression may be provided. For a given similarity score, a track having that similarity score and having a lower confidence is compressed more aggressively compared to a track having that similarity score and a higher confidence, as less reliable data typically contributes less value to downstream analysis. In some embodiments, the confidence level pertains to the first portion, and in other embodiments, the confidence level pertains to the second portion. In some embodiments, the confidence levels of both portions are combined and used to determine the compression level.

In some examples, the method comprises determining a third portion of the motion path of the first object, the third portion indicating position data of the first object at a third plurality of time points in the received video data, the third plurality of time points comprises one or more time points occurring after the first plurality of time points; comparing the third portion of the motion path with at least one representative motion path of the one or more representative motion paths to determine a second similarity score; determining a fourth portion of the motion path of the first object, the fourth portion indicating position data of the first object at a fourth plurality of time points in the received video data, wherein the second plurality of time points comprise one or more of: at least a subset of the third plurality of time points; and one or more time points occurring after the third plurality of time points; determining second metadata indicating the fourth motion path and compressing the second metadata based on the second similarity score, wherein a compression level applied to the second metadata increases with an increasing second similarity score and wherein the compression level applied to the second metadata differs from the compression level applied to the first metadata.

In these examples, the method allows for dynamic adjustment of metadata compression while the tracking of the object is still in progress. Specifically, as additional position data becomes available over time, a third portion of the motion path, covering a later portion of the same object track, is determined and compared to the one or more representative motion paths to compute a second similarity score. Based on this new score, a second compression decision is made for metadata describing the motion of the object (which may span the same or subsequent time points of the object track, as previously discussed). This may allow for updating the compression level applied to the metadata of the object while moving over time, enabling response to real time changes in the motion pattern of the object.

In some examples, comparing the first portion of the motion path with a representative motion path and determining a first similarity score comprises: for each position data in the first portion of the motion path, determining a corresponding position data using the sequential position data in the representative motion path, and determining a spatial distance between the position data and the corresponding position data.

As used herein, a "corresponding position data" in the representative motion path refers to the position in the motion path that is most relevant for comparison with a given position data in the first portion of the motion path. In some examples, this may be the closest position data in space within the representative motion path, optionally constrained by temporal alignment (e.g., matching or nearby time points) as will be further described below. In some examples, the corresponding position data is determined using interpolation between sequential position data in the representative motion path.

The similarity score may thus be derived as a function of these distances: the smaller the cumulative or average spatial distance, the higher the similarity score. Advantageously, motion paths that closely follow a representative motion path, i.e., those with small deviation in space, are recognized as highly similar and gets higher similarity scores, enabling compression strategies that reflect the predictability of the motion behaviour of the object.

In some examples, the step of determining, from historical video data depicting the scene, one or more representative motion paths of objects moving in the scene, comprises: determining a heat map of positions of objects tracked in the historical video data; for each position of at least a plurality of positions in the heat map, determining a further heat map of a next tracked position of an object at the position in the heat map, determining the one or more representative motion paths of objects tracked in the scene using the heap map and the further heat maps.

The (primary) heat map is generated based on the historical positions of tracked objects. This heat map reflects the spatial frequency of object occurrences, i.e., how often tracked objects are observed at various positions in the scene. Next, for each position (or for at least a subset of positions) in this primary heat map, a further (conditional) heat map is generated. This further heat map captures the next positions to which objects typically move after being at that position. In other words, the further heat map models the likely direction or transition behaviour from each position by aggregating the subsequent positions of tracked objects in the historical data. Using this combination of the primary heat map and the further heat maps, typical motion flows through the scene can be determined. These flows can be used to construct representative motion paths. These representative motion paths can be seen as sequences of states generated by a first order Markov model.

In some examples, the spatial difference is weighted using the heat map of positions of the objects tracked in the scene. In particular, the weighting may be inversely related to the heat map value, such that deviations in rarely visited areas of the scene are given greater significance than those occurring in frequently visited areas. This emphasizes spatial deviations in regions in which motion is less common, which are more likely to reflect abnormal or noteworthy behaviour which may lead to a lower compression level.

In some examples, the step of determining, from historical video data depicting the scene, one or more representative motion paths of objects moving in the scene, comprises: clustering motion paths of respective objects tracked in the historical video data; for each cluster, determining a representative motion path using the motion paths of the cluster.

Advantageously, each cluster groups together motion paths that exhibit similar movement patterns. A representative motion path for each cluster may then be computed, for example, by averaging the positions or by selecting a path that minimizes the total distance to all other paths in the cluster.

In some examples, each position data in a representative motion path, except the first position data, is associated with a time point defined relative to a time point associated with an immediately preceding position data in sequential position data of the representative motion path, wherein the first position data in the representative motion path is associated with a predefined time point.

Advantageously, this example allows the representative motion path to reflect not only where objects typically move, but also how fast they move through the scene.

In some examples, comparing the first portion of the motion path with a representative motion path and determining a first similarity score may comprise: for each position data in the first portion of the motion path, determining a corresponding position data in the representative motion path based on temporal alignment of the first portion of the motion path and the representative motion path, wherein the corresponding position data is determined by mapping the time point associated with the position data of the first portion of the motion path to a relative time point of the representative motion path.

Advantageously, this example may enable the similarity score to account for both spatial trajectory and timing behaviour, such as speed of the motion of the tracked object across the scene. This temporal alignment capability may offer several benefits. For example, it may enable detection of objects that are moving faster (or slower) than usual along a known route by comparing the timing of their positions to those in a representative motion path. If e.g., a car progresses through the sequence of positions more quickly than expected this deviation in timing can indicate speeding (which may be a noteworthy behaviour) which in turn reduces the similarity score and the compression level.

In some examples, the second plurality of time points consist of a last time point of the first plurality of time points. In this example, the compression decision may thus be taken in real time while tracking the object, for every new position data that is identified for the track, and the compression decision is only relevant for the latest identified position data. Advantageously, this means the compression decision is limited to the most recently observed position, enabling fast and adaptive updates of compression of the metadata.

According to a second aspect of the disclosure, the above object is achieved by a non-transitory computer-readable storage medium having stored thereon instructions for implementing the method according to the first aspect when executed on a device having processing capabilities.

According to a third aspect of the disclosure, the above object is achieved by a device for compressing metadata of video data depicting a scene, the metadata indicating motion paths of respective objects tracked in the video data, the device configured for: determining, from historical video data depicting the scene, one or more representative motion paths of objects tracked in the scene, each representative motion path comprises sequential position data defining representative object motion in the scene; continuously receiving video data depicting the scene and tracking a first object in the received video data; determining a first portion of a motion path of the first object, the first portion indicating position data of the first object at a first plurality of time points in the received video data; comparing the first portion of the motion path with at least one representative motion path of the one or more representative motion paths to determine a first similarity score; determining a second portion of the motion path of the first object, the second portion indicating position data of the first object at a second plurality of time points in the received video data, wherein the second plurality of time points comprise one or more of: at least a subset of the first plurality of time points; and one or more time points occurring after the first plurality of time points; and determining first metadata indicating the second portion of the motion path and compressing the first metadata based on the first similarity score, wherein a compression level applied to the first metadata increases with an increasing first similarity score.

The second and third aspects may generally have the same features and advantages as the first aspect.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows a scene with representative motion paths of objects tracked in the scene, according to embodiments;
Figure 2 shows a motion path of an object in relation to the representative motion paths in figure 1, according to embodiments;
Figure 3 shows a motion path of another object in relation to the representative motion paths in figure 1, according to embodiments;
Figure 4 shows a first portion of a motion path of an object and a plurality of configurations of a second portion of the motion path of the object, each portions of the motion path indicating position data of the object at a plurality of time points, according to embodiments;
Figure 5 shows three embodiments of compressed metadata indicating the second portions of the motions path of figure 4;
Figure 6 shows a first comparison between a motion path of an object and a representative motion path to determine a similarity score, according to embodiments;
Figure 7 shows a second comparison between a motion path of an object and a representative motion path to determine a similarity score, according to embodiments;
Figure 8 shows a flow chart of a method for compressing metadata of video data depicting a scene. the metadata indicating motion paths of respective objects tracked in the video data, according to embodiments;
Figure 9 shows how a representative motion path can be determined from heat maps, according to embodiments.

### Detailed Description

Modern video processing systems often include functionality for detecting and tracking objects within a scene, producing not only video streams but also structured metadata that describes object behaviour over time. This metadata, indicating e.g., motion paths of tracked objects, can be used for various downstream applications, including behaviour analysis, anomaly detection, search, and statistical aggregation. As these systems become more sophisticated, the size of metadata generated has grown significantly, sometimes even exceeding the size of the corresponding video stream. This presents challenges in terms of bandwidth, storage, and processing efficiency, particularly in real-time deployments.

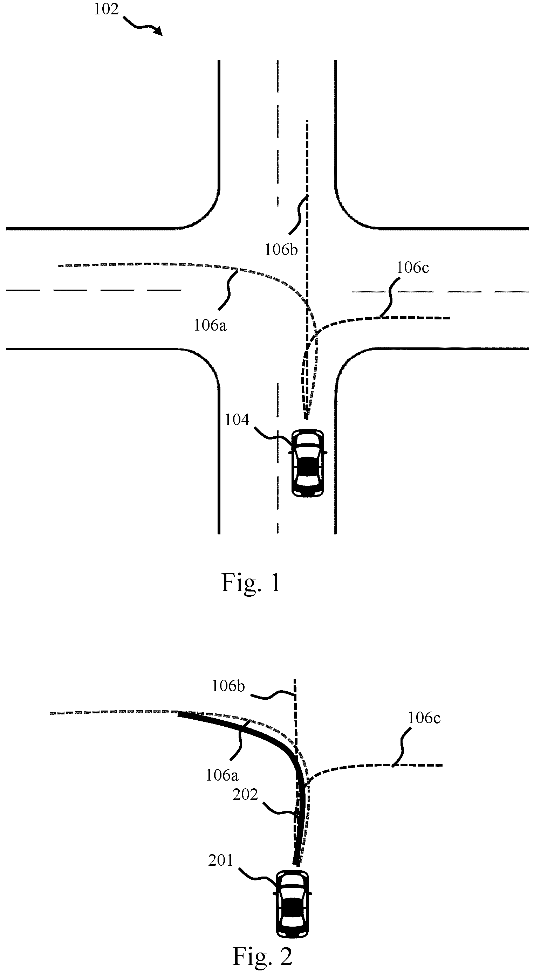

The present disclosure addresses this problem by introducing a method for selectively compressing metadata based on the behavioural characteristics of object motion. In particular, portions of motion paths of tracked objects are compared against representative motion paths, which are learned from historical data. A similarity score is determined to assess how closely motion of a new object aligns with the representative motion paths, and compression is adapted accordingly. By tailoring the compression level based on motion similarity, the techniques disclosed herein enable efficient and context-aware metadata encoding that reduces the size of the metadata while preserving critical information needed for downstream analysis. These techniques will now be described in conjunction with figures 1-8.

Figure 1 illustrates, by way of example, a scene 102, which in this instance is a road intersection. However, it should be understood that the described techniques are applicable to any type of scene, such as indoor environments, public spaces, etc., and are not limited to intersections. The scene is captured as video data, and objects moving within the scene are tracked over time. These objects may include, but are not limited to, vehicles, pedestrians, animals, etc. For simplicity of illustration and description, figure 1 depicts only a single object (a vehicle) 104 moving through the scene.

According to some examples, and as illustrated in Figure 1, the system or device implementing the techniques described herein is configured to determine, from historical video data depicting the scene 102, one or more representative motion paths 106a-106c of objects 104 tracked in the scene. Each representative motion path 106 a-c comprises sequential position data defining representative object motion in the scene 102. In the example of figure 1, three representative motion paths 106 a-c are determined, one representative motion path 106b representing the vehicle 104 driving straight ahead in the crossroad, one representative motion path 106c representing the vehicle 104 taking a right turn, and one representative motion path 106a representing the vehicle 104 taking a left turn.

The one or more representative motion paths 106a-106c may be determined from historical video data by analysing historical trajectories of objects 104 tracked in the scene to capture dominant or recurring movement patterns. This may be achieved for example using modelling techniques based on heat maps or trajectory clustering methods, or a combination of both.

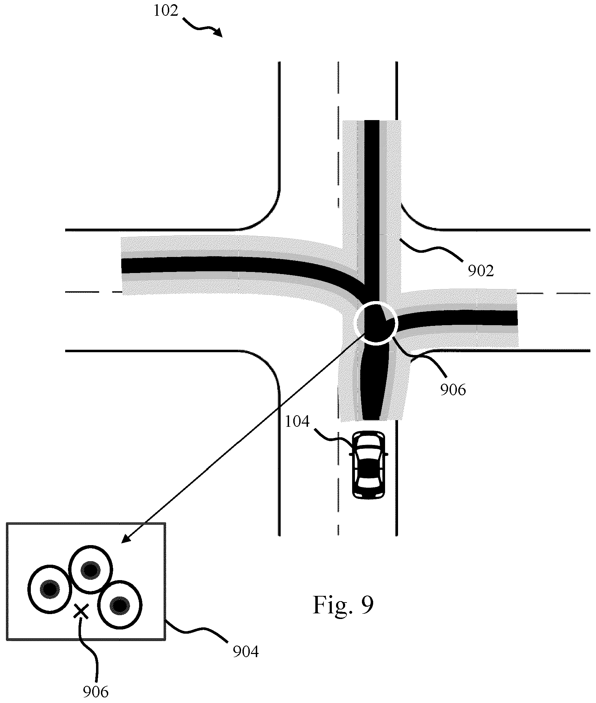

According to one approach, a heat map of positions of objects 104 tracked in the historical video data (from the scene 102) is generated. This is schematically shown in figure 9 using the scene 102 of figure 1. The heat map 902 in figure 9 shows positions of objects 104 coming in from the lower part in the scene 102, i.e., vehicles approaching the intersection from the bottom direction. In figure 9, this heat map 902 thus reflects the frequency of object presence across the spatial layout of the scene 102 for this specific entry direction. For each position 906 in at least a plurality of positions within the heat map 902, a further heat map 904 is determined that captures the most likely next positions observed for objects previously located at that position. In the example shown in figure 9, the position 906 lies at a point in the intersection where the motion path of the tracked object 104 may diverge, depending on whether the object 104 continues straight, turns left, or turns right.

These "next position heat maps" 904 effectively represent transition probabilities from one position to another. By iteratively linking high-probability transitions between positions over time, the representative motion paths that reflect the statistically dominant trajectories in the scene can be determined. This modelling approach may resemble a first-order Markov chain, where each spatial state (position) leads probabilistically to the next.

In an alternative or complementary approach, representative motion paths are derived through clustering. Motion paths of respective objects tracked in the historical video data are grouped into clusters based on spatial similarity and in some embodiments also on temporal similarity. For each cluster, a representative motion path is computed, for example by averaging corresponding positions across trajectories or by selecting a central trajectory (e.g., medoid) that minimizes aggregate distance to other members of the cluster.

This allows for summarizing complex motion behaviours in a scene with a small set of representative motion paths, which can then be used for real-time similarity comparison and compression decisions as will be described below.

In some embodiments, this analysis is performed continuously throughout the day, allowing the representative motion paths to be dynamically updated as patterns of object movement evolve. Furthermore, the representative motion paths may be determined in a context-aware manner, such that they are specific to a time of day (e.g., morning vs. evening traffic), a day of the week (e.g., weekday vs. weekend behaviour), or a season or time of year (e.g., holiday vs. regular season).

Figure 2 shows by way of example, a motion path 202 of an object 201, such as a vehicle, plotted in relation to the representative motion paths 106a-106c previously shown in figure 1. As can be seen, the motion path 202 closely follows the representative motion path 106a representing a left turn in the scene 102. Because the tracked object follows a well-established and statistically representative motion path (i.e., a common motion pattern found in the historical data) 106a, the metadata indicating the motion path 202 may be compressed more aggressively, reflecting its high similarity to the representative motion path 106a, as will be described below.

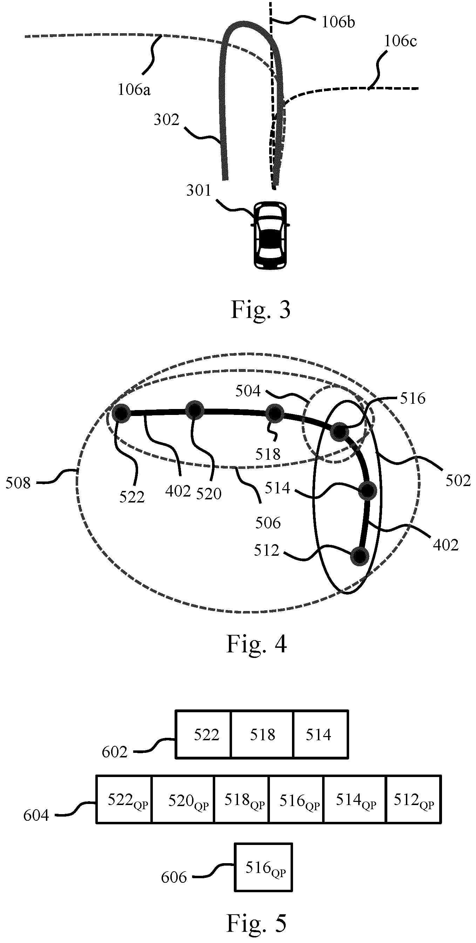

Figure 3 illustrates, by way of example, a motion path 302 of an object 301, such as a vehicle, plotted in relation to the representative motion paths 106a-106c previously shown in figure 1. As depicted, during an initial portion of its trajectory, the motion path 302 closely follows the representative motion path 106a, which in this example corresponds to a vehicle driving straight through the intersection of the scene 102. However, at a later point along the motion path, the tracked object 201 executes a U-turn, diverging significantly from all of the representative motion paths 106a-106c. As a result, the latter portion of the motion path 302 no longer matches any of the representative motion paths 106a-c, and thus the metadata corresponding to this deviating portion may be compressed less aggressively (or not at all) to better capture the unusual behaviour.

Accordingly, these two cases, motion path 202 with high similarity throughout, and motion path 302 with partial deviation, will result in different compression levels being applied to the metadata associated with each motion path, or even to different portions of the same path, depending on their similarity to the representative motion paths. For example, in the example of figure 3, the first part of the motion path 302 which follows the representative motion path 106a may be compressed more aggressively, while the part of the motion path 302 during and after the U-turn may be compressed less aggressively.

Figure 4 shows, by way of example, a full motion path 402 of an object track, wherein the full motion path comprises sequential position data 512-522 that defines the motion of a tracked object within the scene. While the entire motion path 402 is illustrated in Figure 4 for ease of description, it should be understood that, in practice, decisions regarding similarity to representative motion paths may in embodiment be made at various points in time during the course of tracking the object, rather than after the entire path is known.

At each such decision point, all available previous position data of the track up to that point, or a subset of the most recent plurality of position data may be considered. This subset may be defined by a fixed number of past time points or a temporal window. The selected portion (position data) of the motion path of the object is then compared to one or more representative motion paths to determine a similarity score, which in turn is used to guide compression of the associated metadata at that stage.

In figure 4, the decision point for similarity assessment is at a third (in the sequence making up the full object track 402) position data 516. In this example, all available previous position data of the track up to that point 516 is used. As such, a first portion of a motion path (represented by an ellipse 502 in figure 4) is indicating position data 512, 514, 516 of the first object at a first plurality of time points in the received video data, is determined. This portion 502 is thus used to determine similarity score by comparing the first portion 502 with at least one representative motion path of the one or more representative motion paths.

The similarity score is then used to guide the compression of metadata that indicates position data associated with at least a portion of the full motion path 402. The position data affected by the similarity score is herein referred to as a second portion of the motion path (or just second portion), which indicates some or all position data 512-522 of the tracked object, at a second plurality of time points within the received video data. The second plurality of time points may include one or more of the following: (i) at least a subset of the first plurality of time points used to calculate the similarity score, and/or (ii) additional time points occurring after those used in the similarity analysis.

As illustrated in Figure 4, several example configurations of the second portion of the motion path are shown using dashed ellipses:
- In some cases (illustrated by the largest dashed ellipse 508), the second portion includes all position data 512-522 of the full track 402.
- In other cases (illustrated by the medium dashed ellipse 506), the second portion includes mostly future position data 518-522, but starting from the decision point by including position data 516.
- In yet other cases (illustrated by the smallest dashed ellipse 504), the second portion includes only the individual position data 516 at the decision point.

These examples in figure 4 demonstrate that the similarity score, computed based on earlier motion behaviour, can be used to determine a compression level for metadata that covers different temporal portions of the track, including past, present, or future positions, depending on the implementation.

In some examples, the compression level applied to metadata associated with an object track may be recalculated at multiple points in time as the object continues to move through the scene. The recalculation may occur at every newly determined position data, allowing for a real-time adaptation, or at less frequent intervals, such as every other position data point, or after a specified number of position data points.

Using the established nomenclature of first, second, etc., portions of the motion path, each indicating position data of the tracked object at various pluralities of time points in the received video data, this embodiment may be described as follows.

After determining a first portion of a motion path, which represents position data of the object at a first plurality of time points (position data 512-516) and is used to compute a first similarity score, the object tracking system continues tracking the object and subsequently determines a third portion of a motion path. This third portion includes position data of the object at a third plurality of time points, where the third plurality includes one or more time points (e.g., position data 518) occurring after those of the first plurality (position data 512-516).

The third portion is then compared to at least one of the previously determined representative motion paths, thereby computing a second similarity score that reflects how closely the object's more recent movement matches the representative motion paths.

Following this, a fourth portion is determined as described above, which includes position data at a fourth plurality of time points. The fourth plurality may include (i) a subset of the third plurality of time points, and/or (ii) one or more time points occurring after those in the third plurality. A second metadata indicating the fourth portion is generated and compression is applied based on the second similarity score. Notably, the compression level applied to the second metadata may differ from that applied to the first metadata, reflecting changes in similarity between the object's evolving motion pattern and the representative motion path.

In some examples, the decision regarding the compression level is not made incrementally during tracking but instead is deferred until the object track is completed, that is, when the object tracking system determines that the object is no longer being tracked. The decision point is thus at the last position data 522 in the example of figure 4. In such cases, the entire motion path of the object is available for analysis, and a similarity score may be computed based on the full sequence of position data 512-522. The compression level is then determined based on this score and applied to the corresponding metadata, which may also be generated or finalized upon completion of the track.

Figure 5 shows three different embodiments 602, 604, 606 of how the compression level may affect the metadata.

Embodiment 602 represents a case where the compression level is increased by including in the first metadata only a subset of the position data corresponding to the second plurality of time points. For instance, in scenarios where metadata is determined upon completion of the object track and therefore relates to the full set of position data 512-522, compression may be achieved by including only selected position data points at reduced temporal resolution. As an example, the metadata may include only every other position, such as the second position data 514, the fourth position data 518, and the sixth position data 522.

Despite the reduced granularity, these sparse (in time) position data may still be sufficient to provide a coarse but meaningful representation of the motion behaviour of the tracked object. For example, even with fewer data points, it may remain evident that the object executed a left turn in the intersection shown in Figure 1. This approach enables efficient compression while preserving high-level understanding of the tracked motion.

In other embodiments, such as the one shown by metadata 604, 606 in figure 5, the compression level is increased by reducing the precision of the position data of the first object when included in the first metadata. Metadata 604 relates to the same example as metadata 602, i.e., the metadata 604 is determined upon completion of the object track. In this example, a (higher) quantization level (quantization parameter, QP) is applied to each position data 512-522 resulting in quantized position data 512_{QP}-522_{QP}. In this way, the precision of the position data is reduced since the position data is approximated by a set of numbers that can be represented with a lower number of digits or bits. The last embodiment of figure 5 corresponds to the case where the resulting metadata only relates to the position data 516 at the decision point for determining the compression level. In this example, a (higher) QP is applied to this position data 516 resulting in quantized position data 516_{QP}. Similar to the sparse position data example above, despite the reduced details, these quantized position data may still be sufficient to provide a coarse but meaningful representation of the motion behaviour of the tracked object.

The similarity score is not the only factor that may influence the compression level. In some examples, the first portion or the second portion of the motion path is associated with a confidence level, which indicates the object tracking system's estimated level of accuracy of the position data making up the motion path. This confidence level may reflect various aspects of the tracking quality. For instance, in some embodiments, motion occurring further away from the camera capturing the scene may be associated with lower confidence, due to e.g., reduced resolution of the tracked object in the captured video. In other embodiments, the confidence level may be reduced in situations involving occlusions, rapid object movement, poor optical conditions, noise, or object re-identifications, where the tracking algorithm has greater uncertainty about the precise location or identity of the object. The confidence level may pertain to the first portion, the second portion, or both, depending on the application. In some cases, a combined confidence level may be derived by aggregating the individual confidence levels of the two portions.

In this embodiment, for a given value of the similarity score, the compression level applied to the first metadata increases as the confidence level decreases. Put differently, for two motion paths having the same similarity score, the motion path with the lower confidence level may be compressed more aggressively compared to the motion path with a higher confidence level.

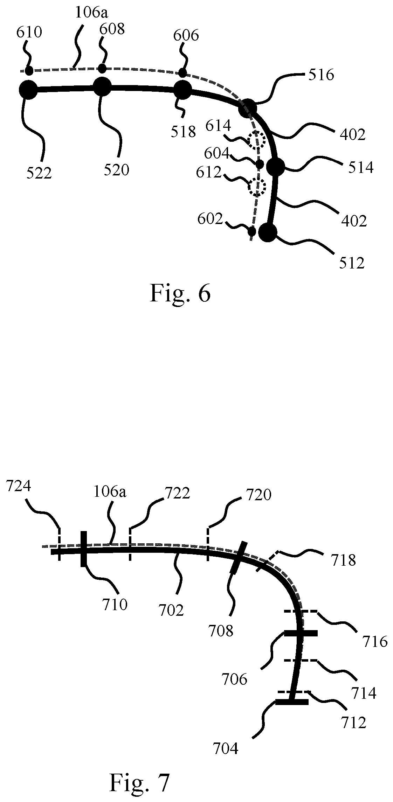

Figure 6 shows, by way of example, how a similarity score between a motion path 402 and a representative motion path 106a can be determined. In this example, for each position data point 512-522 in the motion path 402, a corresponding position data point 602-610 is determined using the sequential position data in the representative motion path 106a. In this embodiment, the corresponding position data 602-610 is selected as the spatially closest position along the representative motion path 106a to the respective position in the motion path 402. To improve the spatial precision of this correspondence, interpolation may be performed between consecutive position data points 612 and 614 in the representative motion path 106a. For example, the position data 604 (corresponding to position data 514 in the motion path 402) may be calculated by interpolating between position data 612 and 614, based on spatial alignment with position data 514 in the motion path 402. In the example of figure 1, position data 512 in the motion track 402 corresponds to position data 602 in the representative motion path 106a, position data 514 in the motion track 402 corresponds to position data 604 in the representative motion track 106a, and so forth.

Once the corresponding positions have been determined, a spatial distance is calculated between each position data 512-522 in the motion path 402 and its corresponding position 602-610 in the representative motion path 106a. These spatial distances are then used to compute the similarity score. In this embodiment, an inverse scoring scheme is used, such that smaller distances yield higher similarity scores, and larger distances result in lower similarity scores. As such, the more closely a movement 402 of an object aligns with a known motion pattern 106a, the more predictable, and hence less behaviourally significant, it is likely to be.

To ensure that the similarity score is independent of the number of data points, the individual distances may be averaged, resulting in a single mean spatial deviation value. The mean spatial deviation value can for example be normalized against a predetermined reference distance. This reference distance may represent a typical or acceptable variation observed between similar motion paths, for instance, based on empirical observations in historical data. The result may then be converted into a bounded similarity score (e.g., between 0 and 1) using a mapping function. A score close to 1 indicates that the object's movement closely follows a known or expected motion path, i.e., it is highly similar and potentially less behaviourally significant. A score closer to 0 suggests greater deviation and may indicate atypical or behaviourally significant movement.

The similarity score for each of the plurality of representative motion paths may be determined and the highest score can be used determine the compression level.

Figure 7 illustrates, by way of example, an embodiment in which each position data point 712-724 in a representative motion path 106a, except for the first position data 712, is associated with a relative time point defined in relation to the time point of the immediately preceding position in the sequence. In this configuration, the first position data 712 is associated with a predefined absolute time point, such as time zero (0). Each subsequent position in the path, e.g., position data 714, 716, and so forth, is associated with a relative time offset from its predecessor, rather than an absolute time stamp.

In this embodiment, comparing the first portion 702 with a representative motion path 106a and determining a first similarity score comprises performing a temporal alignment between the first portion 702 and the representative motion path 106a. Specifically, for each position data point 704-710 in the first portion 702, a corresponding position data point 712-718 in the representative motion path 106a is determined based on matching time points, rather than spatial proximity. In this embodiment the time point associated with each position 704-710 in the first portion 702 is thus mapped to a relative time point in the representative motion path 106a. This allows the comparison to consider not only the shape of the trajectory, but also the temporal dynamics, i.e., the speed of the motion.

To illustrate, consider a simplified case where the time intervals between consecutive points in both the motion path 702 and the representative path 106a are uniform. In this case, the first position data 704 in the motion path 702 maps directly to the first position data 712 in the representative motion path 106a, and the two may be spatially close. However, as the object continues to move, the spatial distance between temporally corresponding position data begins to diverge: for a second time point in the motion path 702 and the representative motion path 106a, the two corresponding position data 706, 714 are farther apart, the third corresponding pair 708, 716 even more so, and by the fourth point in time (the fourth corresponding pair 710, 718) the divergence is significant. This growing spatial discrepancy results in an increasing cumulative distance, which in turn leads to a lower similarity score, indicating that the tracked motion path 702 is deviating in timing from the expected motion path 106a.

By aligning a motion path with the representative motion paths based on time rather than just spatial proximity, the system becomes more sensitive to temporal deviations, such as sudden changes in speed, delays, or hesitation. It enables the detection of behavioural anomalies that might otherwise go unnoticed when comparing only geometric shape of the motion paths.

It should be noted that figures 6 and 7 illustrate examples in which the similarity score is determined based on a comparison with a single representative motion path 106a, for clarity and ease of explanation. However, in practical implementations, the system may compare the evaluated motion path against all available representative motion paths, or a subset thereof. In some embodiments, the subset may be selected based on representative motion paths that originate from a similar starting position or region within the scene as the motion path currently being evaluated, thereby reducing computational complexity while maintaining contextual relevance. The highest similarity score obtained from these comparisons may then be used to guide compression decisions of the metadata.

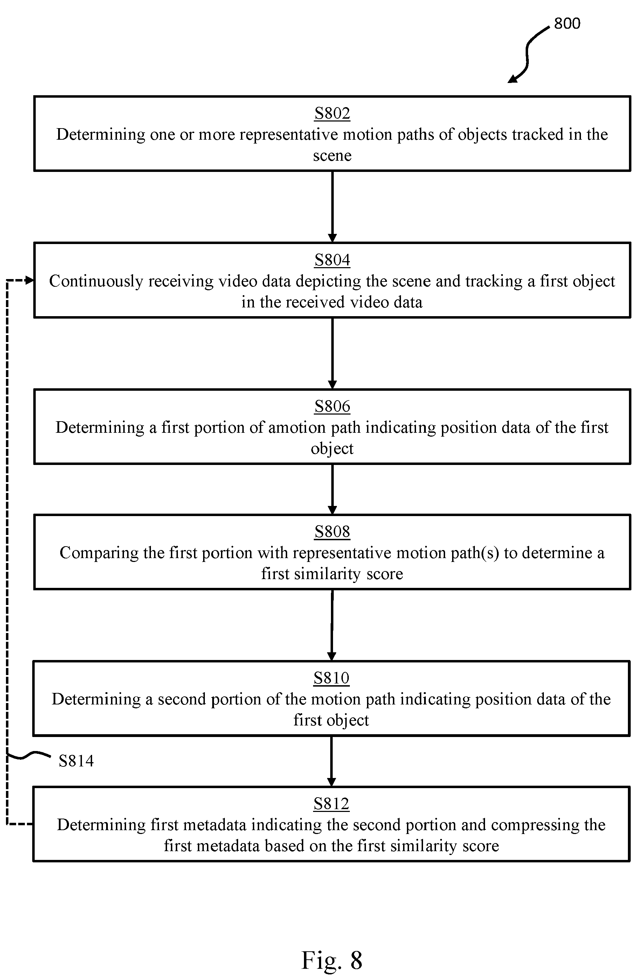

Figure 8 illustrates an example process 800 for compressing metadata associated with video data depicting a scene, where the metadata includes motion paths of respective objects tracked within the video. The process 800 may be implemented as a standalone routine or as part of a larger video analytics or encoding system. In some implementations, the process 800 is carried out by instructions executable by one or more processors, which may be embedded within a single device or distributed across multiple devices within a system. The instructions for performing the process may be stored on one or more non-transitory computer-readable media.

Suitable processors for executing the instructions include, by way of example, general-purpose or special-purpose microprocessors, and may be implemented as single-core or multi-core processors, depending on the architecture of the device or system. The processors may operate individually or cooperatively to execute the method steps described in figure 8. In some embodiments, the processors may be augmented by, or fully implemented within application-specific integrated circuits (ASICs), digital signal processors (DSPs), field-programmable gate arrays (FPGAs), or other dedicated hardware accelerators optimized for high-efficiency video and metadata processing.

The process 800 comprises determining S802, from historical video data depicting the scene, one or more representative motion paths of objects tracked in the scene, each representative motion path comprises sequential position data defining representative object motion in the scene. This step may be performed by, or in coordination with, an object tracking component, which processes (either in real time or as a batch operation) the historical video data to extract and associate position data with identified objects.

The process 800 further comprises continuously receiving S804 video data depicting the scene and tracking a first object in the received video data. The video data may be received from a camera capturing the scene. The tracking may be performed by the above mentioned object tracking component.

The process 800 further comprises determining S806 a first portion of a motion path 502 of the first object, the first portion indicating position data of the first object at a first plurality of time points in the received video data. The position data may represent the locations of the object in various coordinate systems, depending on the context and implementation. For example, the position data may be expressed as pixel coordinates within the image frame, such as image-space positions extracted from bounding boxes or segmentation maps, or as real-world coordinates, such as GPS data.

The process 800 further comprises comparing S808 the first portion with at least one representative motion path of the one or more representative motion paths to determine a first similarity score.

The process 800 further comprises determining S810 a second portion of the motion path of the first object, the second portion indicating position data of the first object at a second plurality of time points in the received video data, wherein the second plurality of time points comprise one or more of: at least a subset of the first plurality of time points; and one or more time points occurring after the first plurality of time points.

The process 800 further comprises determining S812 first metadata indicating the second portion and compressing the first metadata based on the first similarity score, wherein a compression level applied to the first metadata increases with an increasing first similarity score. The resulting compressed metadata may be transmitted alongside the video data as a separate data stream (e.g., an ONVIF data stream) or embedded directly within the video stream using standardized metadata containers or signalling formats (e.g., SEI messages in H.264/HEVC). Alternatively, the metadata may be stored in association with the video data, such as in a linked metadata file.

In some embodiments, the process is iterative, as shown by step S814, and continues while video data is being continuously received at step S804. As the object continues to move through the scene, its motion path under evaluation is updated over time. At one or more evaluation points during the object's trajectory, a new similarity score may be determined based on the updated motion data, and the compression level may be re-evaluated and adjusted accordingly as discussed above.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method (800) for compressing metadata of video data depicting a scene (102), the metadata indicating motion paths of respective objects tracked in the video data, the method comprising:
determining (S802), from historical video data depicting the scene, one or more representative motion paths (106a-c) of objects (104) tracked in the scene, each representative motion path comprises sequential position data defining representative object motion in the scene;
continuously receiving (S804) video data depicting the scene and tracking (202, 302, 402, 502, 702, 702) a first object (201) in the received video data;
determining (S806) a first portion of a motion path (502) of the first object, the first portion indicating position data (512, 514, 516) of the first object at a first plurality of time points in the received video data;
comparing (S808) the first portion of the motion path with at least one representative motion path of the one or more representative motion paths to determine a first similarity score;
determining (S810) a second portion of the motion path (504, 506, 508) of the first object, the second portion indicating position data (512 - 522) of the first object at a second plurality of time points in the received video data, wherein the second plurality of time points comprise one or more of: at least a subset of the first plurality of time points; and one or more time points occurring after the first plurality of time points; and
determining (S812) first metadata (602, 604, 606) indicating the second portion of the motion path and compressing the first metadata based on the first similarity score, wherein a compression level applied to the first metadata increases with an increasing first similarity score.

2. The method of claim 1, wherein the compression level is increased by only including the position data of the first object in the first metadata at a subset of time points of the second plurality of time points.

3. The method of any one of claims 1-2, wherein the compression level is increased by reducing the precision of the position data of the first object when included in the first metadata.

4. The method of any one of claims 1-3, wherein the first portion or the second portion of the motion path is associated with a confidence level indicating a level of accuracy of the first portion of the motion path, and wherein, for a given value of the first similarity score, the compression level applied to the first metadata increases as the confidence level decreases.

5. The method of any one of claims 1-4, further comprising:
determining a third portion of the motion path of the first object, the third portion indicating position data of the first object at a third plurality of time points in the received video data, the third plurality of time points comprises one or more time points occurring after the first plurality of time points;
comparing the third portion of the motion path with at least one representative motion path of the one or more representative motion paths to determine a second similarity score;
determining a fourth portion of the motion path of the first object, the fourth portion indicating position data of the first object at a fourth plurality of time points in the received video data, wherein the second plurality of time points comprise one or more of: at least a subset of the third plurality of time points; and one or more time points occurring after the third plurality of time points;
determining second metadata indicating the fourth portion of the motion path and compressing the second metadata based on the second similarity score, wherein a compression level applied to the second metadata increases with an increasing second similarity score and wherein the compression level applied to the second metadata differs from the compression level applied to the first metadata.

6. The method of any one of claims 1-5, wherein comparing the first portion of the motion path with a representative motion path and determining a first similarity score comprises:
for each position data in the first portion of the motion path, determining a corresponding position data using the sequential position data in the representative motion path, and determining a spatial distance between the position data and the corresponding position data.

7. The method of claim 10, wherein the corresponding position data is determined using interpolation between sequential position data in the representative motion path.

8. The method of any one of claims 1-7, wherein the step of determining, from historical video data depicting the scene, one or more representative motion paths of objects moving in the scene, comprises:
determining a heat map (902) of positions of objects tracked in the historical video data;
for each position (906) of at least a plurality of positions in the heat map, determining a further heat map (904) of a next tracked position of an object at the position in the heat map,
determining the one or more representative motion paths of objects tracked in the scene using the heap map and the further heat maps.

9. The method of claim 8 when dependent on claim 6 or 7, wherein the spatial difference is weighted using the heat map of positions of the objects tracked in the scene.

10. The method of any one of claims 1-7, wherein the step of determining, from historical video data depicting the scene, one or more representative motion paths of objects moving in the scene, comprises:
clustering motion paths of respective objects tracked in the historical video data;
for each cluster, determining a representative motion path using the motion paths of the cluster.

11. The method of any one of claims 1-9, wherein each position data in a representative motion path, except the first position data, is associated with a time point defined relative to a time point associated with an immediately preceding position data in sequential position data of the representative motion path, wherein the first position data in the representative motion path is associated with a predefined time point.

12. The method of claim 11, wherein comparing the first portion of the motion path with a representative motion path and determining a first similarity score comprises:
for each position data in the first portion of the motion path, determining a corresponding position data in the representative motion path based on temporal alignment of the first portion of the motion path and the representative motion path, wherein the corresponding position data is determined by mapping the time point associated with the position data of the first portion of the motion path to a relative time point of the representative motion path.

13. The method of any one of claims 1-12, wherein the second plurality of time points consist of a last time point of the first plurality of time points.

14. A non-transitory computer-readable storage medium having stored thereon instructions for implementing the method according to any one of claims 1-13 when executed on one or more devices having processing capabilities.

15. A device for compressing metadata of video data depicting a scene (102), the metadata indicating motion paths of respective objects tracked in the video data, the device configured for:
determining (S802), from historical video data depicting the scene, one or more representative motion paths (106a-c) of objects (104) tracked in the scene, each representative motion path comprises sequential position data defining representative object motion in the scene;
continuously receiving (S804) video data depicting the scene and (202, 302, 402, 502, 702, 702) a first object (201) in the received video data;
determining (S806) a first portion of a motion path (502) of the first object, the first portion indicating position data (512, 514, 516) of the first object at a first plurality of time points in the received video data;
comparing (S808) the first portion of the motion path with at least one representative motion path of the one or more representative motion paths to determine a first similarity score;
determining (S810) a second portion of the motion path (504, 506, 508) of the first object, the second portion indicating position data (512- 522) of the first object at a second plurality of time points in the received video data, wherein the second plurality of time points comprise one or more of: at least a subset of the first plurality of time points; and one or more time points occurring after the first plurality of time points;
determining (S812) first metadata (602, 604, 606) indicating the second portion of the motion path and compressing the first metadata based on the first similarity score, wherein a compression level applied to the first metadata increases with an increasing first similarity score.

## Amended claims

### Amended claims in accordance with Rule 137(2) EPC.

1. A method (800) for compressing metadata of video data depicting a scene (102), the metadata indicating motion paths of respective objects tracked in the video data, the method comprising:
determining (S802), from historical video data depicting the scene, one or more representative motion paths (106a-c) of objects (104) tracked in the scene, each representative motion path comprises sequential position data defining representative object motion in the scene;
continuously receiving (S804) video data depicting the scene and tracking (202, 302, 402, 502, 702, 702) a first object (201) in the received video data;
determining (S806) a first portion of a motion path (502) of the first object, the first portion indicating position data (512, 514, 516) of the first object at a first set of time points in the received video data, the first set of time points comprises a first plurality of time points;
comparing (S808) the first portion of the motion path with at least one representative motion path of the one or more representative motion paths to determine a first similarity score;
determining (S810) a second portion of the motion path (504, 506, 508) of the first object, the second portion indicating position data (512 - 522) of the first object at a second set of time points in the received video data, wherein the second set of time points differs from the first set of time points, wherein the second set of time points comprises one or more of: at least a subset of the first plurality of time points; and one or more time points occurring after the first plurality of time points; and
determining (S812) first metadata (602, 604, 606) indicating the second portion of the motion path and compressing the first metadata based on the first similarity score, wherein a compression level applied to the first metadata increases with an increasing first similarity score.

2. The method of claim 1, wherein the second set of time points comprises a second plurality of time points, wherein the compression level is increased by only including the position data of the first object in the first metadata at a subset of time points of the second plurality of time points.

3. The method of any one of claims 1-2, wherein the compression level is increased by reducing the precision of the position data of the first object when included in the first metadata.

4. The method of any one of claims 1-3, wherein the first portion or the second portion of the motion path is associated with a confidence level indicating a level of accuracy of the first portion of the motion path, and wherein, for a given value of the first similarity score, the compression level applied to the first metadata increases as the confidence level decreases.

5. The method of any one of claims 1-4, further comprising:
determining a third portion of the motion path of the first object, the third portion indicating position data of the first object at a third set of time points in the received video data, the third set of time points comprises a third plurality of time points, the third set of time points comprises one or more time points occurring after the first plurality of time points;
comparing the third portion of the motion path with at least one representative motion path of the one or more representative motion paths to determine a second similarity score;
determining a fourth portion of the motion path of the first object, the fourth portion indicating position data of the first object at a fourth set of time points in the received video data, wherein the fourth set of time points differs from the third set of time points, wherein the fourth set of time points comprises one or more of: at least a subset of the third plurality of time points; and one or more time points occurring after the third plurality of time points;
determining second metadata indicating the fourth portion of the motion path and compressing the second metadata based on the second similarity score, wherein a compression level applied to the second metadata increases with an increasing second similarity score and wherein the compression level applied to the second metadata differs from the compression level applied to the first metadata.

6. The method of any one of claims 1-5, wherein comparing the first portion of the motion path with a representative motion path and determining a first similarity score comprises:
for each position data in the first portion of the motion path, determining a corresponding position data using the sequential position data in the representative motion path, and determining a spatial distance between the position data and the corresponding position data.

7. The method of claim 10, wherein the corresponding position data is determined using interpolation between sequential position data in the representative motion path.

8. The method of any one of claims 1-7, wherein the step of determining, from historical video data depicting the scene, one or more representative motion paths of objects moving in the scene, comprises:
determining a heat map (902) of positions of objects tracked in the historical video data;
for each position (906) of at least a plurality of positions in the heat map, determining a further heat map (904) of a next tracked position of an object at the position in the heat map,
determining the one or more representative motion paths of objects tracked in the scene using the heap map and the further heat maps.

9. The method of claim 8 when dependent on claim 6 or 7, wherein the spatial difference is weighted using the heat map of positions of the objects tracked in the scene.

10. The method of any one of claims 1-7, wherein the step of determining, from historical video data depicting the scene, one or more representative motion paths of objects moving in the scene, comprises:
clustering motion paths of respective objects tracked in the historical video data;
for each cluster, determining a representative motion path using the motion paths of the cluster.

11. The method of any one of claims 1-9, wherein each position data in a representative motion path, except the first position data, is associated with a time point defined relative to a time point associated with an immediately preceding position data in sequential position data of the representative motion path, wherein the first position data in the representative motion path is associated with a predefined time point.

12. The method of claim 11, wherein comparing the first portion of the motion path with a representative motion path and determining a first similarity score comprises:
for each position data in the first portion of the motion path, determining a corresponding position data in the representative motion path based on temporal alignment of the first portion of the motion path and the representative motion path, wherein the corresponding position data is determined by mapping the time point associated with the position data of the first portion of the motion path to a relative time point of the representative motion path.

13. The method of any one of claims 1-12, wherein the second set of time points consist of a last time point of the first plurality of time points.

14. A non-transitory computer-readable storage medium having stored thereon instructions for implementing the method according to any one of claims 1-13 when executed on one or more devices having processing capabilities.

15. A device for compressing metadata of video data depicting a scene (102), the metadata indicating motion paths of respective objects tracked in the video data, the device configured for:
determining (S802), from historical video data depicting the scene, one or more representative motion paths (106a-c) of objects (104) tracked in the scene, each representative motion path comprises sequential position data defining representative object motion in the scene;
continuously receiving (S804) video data depicting the scene and (202, 302, 402, 502, 702, 702) a first object (201) in the received video data;
determining (S806) a first portion of a motion path (502) of the first object, the first portion indicating position data (512, 514, 516) of the first object at a first set of time points in the received video data, the first set of time points comprises a first plurality of time points;
comparing (S808) the first portion of the motion path with at least one representative motion path of the one or more representative motion paths to determine a first similarity score;
determining (S810) a second portion of the motion path (504, 506, 508) of the first object, the second portion indicating position data (512- 522) of the first object at a second set of time points in the received video data, wherein the second set of time points differs from the first set of time points, wherein the second set of time points comprises one or more of: at least a subset of the first plurality of time points; and one or more time points occurring after the first plurality of time points;
determining (S812) first metadata (602, 604, 606) indicating the second portion of the motion path and compressing the first metadata based on the first similarity score, wherein a compression level applied to the first metadata increases with an increasing first similarity score.
